(19) Europäisches Patentamt

European Patent Office

Office européen des brevets

(11) **EP 0 396 121 B1**

(12) **EUROPEAN PATENT SPECIFICATION**

(45) Date of publication and mention
of the grant of the patent:
**11.09.1996 Bulletin 1996/37**

(51) Int Cl.[6]: **G10L 9/14**, H04B 1/66

(21) Application number: **90108332.9**

(22) Date of filing: **02.05.1990**

(54) **A system for coding wide-band audio signals**

System zur Codierung von Breitbandaudiosignalen

Système pour le codage de signaux audio à large bande

(84) Designated Contracting States:
**DE FR GB IT NL SE**

(30) Priority: **03.05.1989 IT 6731789**

(43) Date of publication of application:
**07.11.1990 Bulletin 1990/45**

(73) Proprietor: **CSELT Centro Studi e Laboratori Telecomunicazioni S.p.A.**
**I-10148 Turin (IT)**

(72) Inventors:
• **Montagna, Roberto**
**Torino (IT)**
• **Omologo, Maurizio**
**Sarmeola di Ribano (Padova) (IT)**
• **Sereno, Daniele**
**Torino (IT)**

(74) Representative:
**Riederer Freiherr von Paar zu Schönau, Anton et al**
**Lederer, Keller & Riederer,**
**Postfach 26 64**
**84010 Landshut (DE)**

(56) References cited:
EP-A- 0 111 612        EP-A- 0 267 344
US-A- 4 538 234

• ICC'86, IEEE INTERNATIONAL CONFERENCE ON COMMUNICATIONS'86, Toronto, 22nd-25th June 1986, vol. 2, pages 1295-1299, IEEE, New York, US; Y. TADA et al.: "16 Kbit/s APC-AB coder using a single chip digital signal processor"

• ICASSP'82, INTERNATIONAL CONFERENCE ON ACOUSTICS, SPEECH, AND SIGNAL PROCESSING, Paris, 3rd-5th May 1982, vol. 3, pages 1672-1675, IEEE, New York, US; M. HONDA et al.: "Adaptive bit allocation scheme in predictive coding of speech"

• ICASSP'88, INTERNATIONAL CONFERENCE ON ACOUSTICS, SPEECH, AND SIGNAL PROCESSING, New York, 11th-14th April, vol. 1, pages 390-393, IEEE, New York, US; K. NAYEBI et al.: "Analysis of the self-excited subband coder: a new approach to medium band speech coding"

• SPEECH COMMUNICATION, vol. 7, no. 2, July 1988, pages 193-207, Elsevier Science Publishers B.V., Amsterdam, NL; V. LAZZARI et al.: "Comparison of two speech codecs for DMR systems"

• ICASSP'81, PROCEEDINGS OF THE IEEE INTERNATIONAL CONFERENCE ON ACOUSTICS, SPEECH AND SIGNAL PROCESSING, Atlanta, Georgia, 30th March-1st April 1981, vol. 1, pages 631-635, IEEE, New York, US; R.S. CHEUNG et al.: "The design of a 16 KB/S split-band adaptive predictive coder for noisy channels"

• ICASSP'86, PROCEEDINGS OF THE IEEE-IECEJ-ASJ INTERNATIONAL CONFERENCE ON ACOUSTICS, SPEECH AND SIGNAL PROCESSING, Tokyo, 7th-11th April 1986, vol. 1, pp. 449-452, IEEE, New York, US; H. ABUT et al.: "Low-rate speech encoding using vector quantization and subband coding"

EP 0 396 121 B1

- **ICASSP'87, 1987 INTERNATIONAL CONFERENCE ON ACOUSTICS, SPEECH, AND SIGNAL PROCESSING, Dallas, Texas, 6th-9th April 1987, vol. 3, pages 1649-1652, IEEE, New York, US; P. KROON et al.: "Quantization procedures for the excitation in CELP coders"**

## Description

The present invention concerns audio signal coding systems, and more particularly a system for coding wide-band audio signals.

The term "wide-band audio signals" is used to indicate audio signals whose bandwidth is wider than the conventional 3.4 kHz telephone band, and more particularly signals with a bandwidth of the order of 7 kHz.

It is known that conventional telephone lines, having a bandwidth of about 3.4 kHz, offer an audio signal quality which is not sufficient for a number of services offered by the future integrated services digital networks, namely music broadcasting, audioconference, and visual telephony.

More particularly, in visual telephony, where two circuit-switched 64 kbit/s channels (channels B) are used for information signals, a significant enhancement of image quality is obtained if coding bit rate is raised from the usual 64 kbit/s to 96 or even 112 kbit/s. Subscribers seem to like not only the image quality enhancement afforded by such high rates, but also a higher audio signal quality such as that obtainable by the use of the wide band. As a consequence audio coders operating at 32 or 16 kbit/s (according to whether the image is transmitted at 96 or 112 kbit/s) on 7 kHz input signals are of interest.

For other applications such as audioconference, such a low bit rate coding of audio signals provides larger band availability for non-audio transmissions, such as facsimile, which may accompany audio signal transmission.

An international standard exists (CCITT recommendation G 722) for coding 7 kHz audio signals, which describes a system for coding such signals at bit rates of 48, 56 or 64 kbit/s. A coding system substantially similar to that proposed by said recommendation is described in the paper entitled "Digital Transmission of Commentary Grade (7 kHz) Audio at 56 or 64 kbit/s." by J. D.Johnston and D. J. Goodman, IEEE Transactions on Communications, Vol COM-28, No. 1, January 1980. In that system the signal to be coded is split into two sub-bands, the lower up to 3650 Hz and the upper from 3600 to 6800 Hz. The lower sub-band is coded with 4 bit/sample ADPCM (Adaptive Differential Pulse Code Modulation) and the upper one with 3 bit/sample or 4 bit/sample APCM (Adaptive Pulse Code Modulation), depending on whether 56 kbit/s or 64 kbit/s transmission rate is desired.

Clearly the adoption of these techniques would entail giving up image quality enhancement, in case of visual telephony, and would limit non-speech transmission possibilities in case of services such as audioconference. Moreover, the techniques described in that paper cannot be used to obtain bit rates in the range 32 to 16 kbit/s, since the two coders ought to operate in the range 16 to 8 kbit/s, and it is known that at present ADPCM or APCM coders do not offer a coding gain sufficient to ensure the desired quality at such rates: hence, their use would annul the advantages inherent in the use of the wide band for the audio signals.

It is already known from the paper entitled "CELP coding for high quality speech at 8 kbit/s" presented by M. Copperi and D. Sereno at the conference ICASSP '86, Tokyo, 7 - 11 April 1986 (paper published at pages 1685-1687 of the conference proceedings) a speech-signal coding system, wherein the signal to be coded is split into two sub-bands, each one being coded by CELP (Codebook Excited Linear Prediction) technique, which is a particular analysis-by-synthesis technique. However such a system has been studied for signals whose band corresponds to the normal telephone band (0 to 3.4 kHz); sub-band splitting gives rise to signals having spectral characteristics considerably different from those of the signals obtained by splitting a wide-band signal, where the lower sub-band basically corresponds to the total band to be coded in the system described in the above mentioned paper. Besides, neither long-term analysis nor optimum scale factor estimation for every excitation vector are performed in that system .

The problem of finding and encoding the excitation parameters is discussed in the article "Quantization Procedures for the Excitation in CELP Coders", IC ASSP '87, 1987 International Conference on Acoustics, Speech and Signal Processing, Dallas, Texas, 6th-9th April, 1987, vol. 3, pages 1649-1652, by P. Kroon et al. In the described method the pitch predictor parameters may be determined either in an open loop configuration or in a closed loop configuration. No configuration is known from this document which is intermediate between the open loop and the closed loop configurations.

An optimized APC-AB (adaptive predictive coding with adaptive bit allocation) algorithm in terms of reduced processing complexity, while maintaining its speech quality, is described in the article "16 kbit/s APC-AB coder using a single chip digital signal processor", ICC '86, IEEE International Conference on Communications '86, Toronto, 22nd-25th June, 1986, vol. 2, pages 1295-1299, by Y. Tada et al. A method is disclosed in which the band of the signal to be coded is divided into sub-bands, the signals of the different sub-bands are independently coded and the coded signals are transmitted at medium bit rate (16 kbit/s). However, the method concerns coding of signals whose band substantially corresponds to the conventional telephone band (0-4 kHz). The processing of wide-band signals is not possible with said method. Furthermore, the synthesis technique is not a technique in which the excitation signal for the synthesis filter simulating the vocal tract at the decoder is chosen in such a manner as to minimize a perceptually significant distortion measure.

The invention provides on the contrary a coding method and device in which the sub-band structure (e.g. with 2 sub-bands) is maintained and each sub-band is coded according to a technique ensuring a higher coding gain at the bit rates of interest and hence ensuring the quality satisfying visual telephony and audioconference requirements.

A method of coding audio signals, comprising the steps of: converting the signal to be coded into digital form, filtering the digital signal so as to split the total band into at least two sub-bands, organizing the signals of each sub-band into frames comprising a predetermined number of samples, coding the signals of each sub-band independently of those of the other sub-bands, and sending the coded signals onto a transmission line for transmission at medium bit rate, is characterized in that the signals to be coded and to be split into the sub-bands are wide-band audio signals; and the signals of each sub-band are coded according to an analysis-by-synthesis technique in which the excitation signal is chosen out of a codebook of vectors (codebook excited linear prediction technique) and in which a short term analysis of the signal to be coded is effected to determine a set of linear prediction coefficients and a long term analysis is effected to determine a long-term analysis lag (pitch period) and a long-term analysis gain, the coded signals thus containing quantized information relevant to the excitation, to the linear prediction coefficients and to the long-term analysis lag and gain, wherein the long-term analysis is carried out in two subsequent steps, during a first of which an optimum value of the lag is determined, while during the second step an optimum value of the long-term analysis gain is determined jointly with a sequence of excitation vectors and a scale factor for each vector, the long-term analysis gain, the sequence of vectors and the respective scale factors forming an optimum excitation model and the long term analysis lag and gain being determined for each excitation vector of the sequence, and wherein the quantized information relevant to the linear prediction coefficients is obtained through a split-codebook vector quantization of a representation of said linear prediction coefficients.

The invention also concerns a device for implementing the method, comprising: means for sampling the signal to be coded at a first sampling frequency which is a multiple of the maximum frequency of said signal, means for filtering the sampled signal so as to split its band into adjacent sub-bands, means for sampling the signals of each sub-band at their respective Nyquist frequency, coders for digitally coding the sampled signals of each sub-band, and means for sending the coded signals relevant to each sub-band onto a transmission line onto which the coded audio signals are transmitted at medium bit rate; which device is characterized in that, for coding wide-band audio signals split into sub-bands, each coder is an analysis-by-synthesis coder in which the excitation signal is chosen out of a codebook of vectors (codebook excited linear prediction technique) and includes means for effecting a short-term and a long-term analysis of the audio signal of the respective sub-band and for determining an excitation signal for reproducing each one of subsequent portions of said audio signal, the coded signal including quantized information relevant to the excitation, to linear prediction coefficients determined by the short-term analysis means and to a long-term analysis lag (pitch period) and gain; the means for effecting the long-term analysis and determining the excitation signal are arranged to operate in two subsequent steps, in a first of which the means for long-term analysis determine an optimum value for the long-term analysis lag whereas in the second step an excitation generator determines an optimum excitation model, consisting of an optimum value of the long-term analysis gain, of a sequence of vectors chosen out of the excitation vector codebook and of a respective scale factor. said gain, excitation vectors and scale factor being jointly determined: and the means for short-term analysis are connected to a circuit for split-codebook vector quantization of adjacent spectrum line pairs, or of differences between adjacent spectrum lines, obtained as a representation of linear prediction coefficients determined by the short-term analysis.

The invention will be better understood with reference to the annexed drawing, in which:

- Fig. 1 is a block diagram of the coding system according to the invention;
- Fig. 2 is a block diagram of a coder based on multi-pulse excitation technique, to be used in the invention;
- Fig. 3 is a block diagram of the circuit concerning long-term analysis and excitation pulse generation in the coder of Fig. 2;
- Figs. 4 and 5 are block diagrams corresponding to those of Figs. 2 and 3 in the case of CELP technique; and
- Fig. 6 shows a variant of the block diagram of Fig. 5.

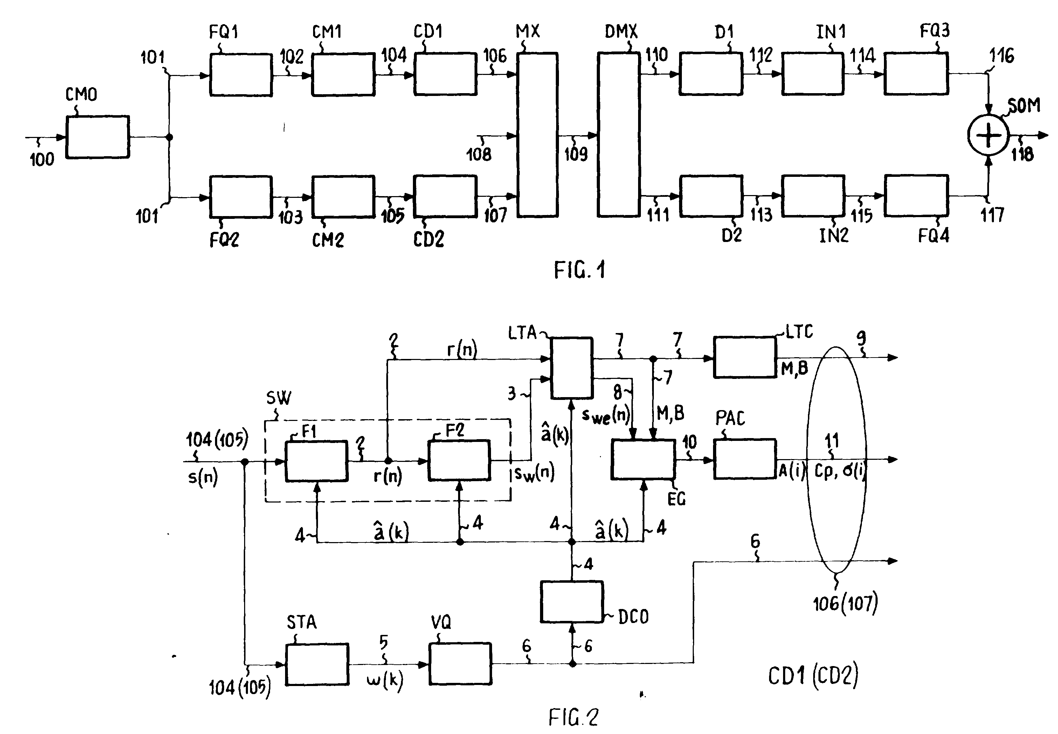

In Fig. 1, a 7 kHz audio signal, present on a line 100 and obtained by suitable analog filtering in filters not shown, is fed to a first sampler CM0, operating e.g. at 16 kHz, whose output 101 is connected to two filters FQ1, FQ2 one of which (namely FQ1) is a high-pass filter whilst the other is a low-pass filter. Said two filters, which have the same bandwidth, can advantageously be of the type known as QMF (Quadrature Mirror Filter), apt to let through half the band admitted by the sampling frequency. Such filters allow a signal reconstruction which is not affected by the aliasing typical of subsampling and interpolation operations and has a negligible in-band distortion.

The signals present on outputs 102, 103 of filters FQ1, FQ2, relevant to the upper and the lower sub-band respectively, are supplied to samplers CM1, CM2, operating at the Nyquist frequency for such signals, i.e. 8 kHz if sampler CM0 operates at 16 kHz. The samples thus obtained, organized into frames of convenient duration, e.g. 15 or 20 ms, are supplied, through connections 104, 105, to coders CD1, CD2, operating according to analysis-by-synthesis techniques. The coded signals, present on connections 106, 107, are sent onto transmission line 109 through devices, which are schematically represented by multiplexer MX, allowing transmission on line 109 also of non-speech signals, if any, present on a connection 108. At the other end of line 109, a demultiplexer DMX sends the speech signals, via connections 110, 111, to decoders D1, D2, reconstructing the signals of the two sub-bands. Processing of non-speech signal is of no interest to this invention and hence the devices carrying out such processing are not shown.

Outputs 112, 113 of D1, D2 are connected to respective interpolators IN1, IN2, reconstructing the 16 kHz signals. Outputs 114, 115 of said interpolators are connected to filters FQ3, FQ4, analogous to filters FQ1 and FQ2, eliminating aliasing distortion in the interpolated signals. The filtered signals relevant to the two sub-bands, present on connections 116, 117, are then recombined into a signal with the same band as the original signal (as schematically represented by adder SOM), and sent through a line 118 to utilizing devices.

For implementing coders CD1, CD2, and hence decoders D1, D2, different alternatives are possible as follows:

- both sub-bands are given the same importance in coding, and are coded with the same bit rate; the two coders may or may not be based on the same technique: the choice of two equal coders can however offer advantages from the constructive standpoint;
- the total bit rate is unequally shared between the two sub-bands, so as to assign each sub-band a rate ensuring the same distortion in both sub-bands;
- each sub-band is coded with the technique better suited to represent its excitation characteristics, and at the same time with the technique which is better suited to the bit rate chosen for that sub-band.

The first solution allows higher-modularity coders to be implemented; a solution of this kind is obviously preferred when the signals to be coded present substantially the same characteristics in both sub-bands. The second and third solutions, still starting from quite general remarks, exploit the knowledge of the characteristics of the signals to be coded, and the dependence on such characteristics is maximum in the third solution: the resulting coders will hence present optimum performance for a particular signal and are suitable for different cases from those which can be faced by the first solution.

Dynamic allocation of the available bit rate is also possible, i. e. each sample frame of each sub-band is allotted a bit rate ensuring uniform distortion in the frame, such rate being variable from a frame to the subsequent one.

Among analysis-by-synthesis coding techniques which can be used in coders CD1, CD2 the following are worth mentioning: multi-pulse excitation linear prediction, the already-cited CELP, VAPC (Vectorial Adaptive Predictive Coding), RPE/LTP (Regular Pulse Excited [coding with] Long Term Prediction), VADPCM (Vectorial Adaptive Differential Pulse Code Modulation). A multi-pulse coder and a CELP coder will be described hereinafter by way of example.

When the multi-pulse excitation coding technique is used, coders CD1 and CD2 can be implemented and can operate as described in European Patent Application No. 89117837.8 filed on 27.09.1989, entitled "Method of and device for speech signal coding and decoding by means of a multipulse excitation".

The method described in that application comprises a coding phase including the following operations:

- speech signal conversion into frames of digital samples;
- short-term analysis of the speech signal, to determine a group of linear prediction coefficients relevant to a current frame and a representation thereof as line spectrum pairs;
- coding of said representation of the linear prediction coefficients;
- spectral shaping of the speech signal, by weighting the digital samples in a frame by a first and a second weighting functions, the weighting according to the first weighting function generating a residual signal which is then weighted by the second function to generate the spectrally-shaped speech signal;
- long-term analysis of the speech signal, by using said residual signal and said spectrally-shaped signal, to determine the lag separating a current sample from a preceding sample used to process said current sample, and the gain by which said preceding sample is weighted for the processing;
- determination of the positions and amplitudes of the excitation pulses, by exploiting the results of short-term and long-term analysis, said determination being performed in closed loop as a part of the procedure by which excitation pulse positions are determined;
- coding of the values of said lag and gain of long-term analysis and of said amplitudes and positions of the excitation pulses, the coded values forming, jointly with the coded representation of the linear prediction coefficients and with coded r.m.s values of said excitation pulses, the coded speech signal;

and also comprises a decoding phase, where the excitation is reconstructed starting from the coded values of the amplitudes, the positions and the r.m.s. values of the pulses and where, by using the reconstructed excitation, a synthesized speech signal is generated, by means of a long-term synthesis filtering followed by a short-term synthesis filtering, which filterings use the long-term analysis parameters and respectively the quantized linear prediction coefficients, and is characterized in that said long-term analysis and excitation pulse generation are performed in successive steps, in the first of which long-term analysis gain and lag are determined by minimizing a mean squared error between the spectrally-shaped speech signal and a further signal obtained by weighting by said second weighting function the signal resulting from a long-term synthesis filtering, which is similar to that performed during decoding and in which the signal used for the synthesis is a null signal, while in the second step the amplitudes and positions of the excitation pulses are actually determined by minimizing the mean squared error between a signal representing the difference between the spectrally-shaped speech signal and said further signal and a third weighted signal, obtained by submitting the excitation pulses to a long-term synthesis filtering and to a weighting by said second weighting function, and in that the coding of said representation of the linear prediction coefficients consists in a vector quantization of the line spectrum pairs or of the adjacent line pair differences according to a split-codebook quantization technique.

In a preferred embodiment of such method, which is also used in the present invention, the lag and the gain are determined in two successive steps, in the first of which the lag is determined by minimizing the mean squared error between the residual signal and a signal which is the signal resulting from said long-term synthesis filtering with null input, if the synthesis relevant to a sample of the current frame is performed on the basis of a sample of a preceding frame, and is said residual signal if the synthesis relevant to a sample of the current frame is performed on the basis of a preceding sample of the same frame, while in the second step the gain is calculated with the following sequence of operations: a value of said further signal is determined for a unitary gain value; a first error value is hence determined, and the operations for determining the value of the signal weighted with said second weighting function and of the error are repeated for each value possible for the gain, the value adopted being the one which minimizes the error.

The device implementing the above described method comprises, for speech signal coding:

- means for converting the speech signal into frames of digital samples;
- means for the short-term analysis of the speech signal, which means receive a group of samples from said converting means, compute a set of linear prediction coefficients relevant to a current frame, and emit a representation of said linear prediction coefficients as line spectrum pairs;
- means for coding said representation of the linear prediction coefficients;
- means for obtaining quantized linear prediction coefficients from said coded representation;
- a circuit for the spectral shaping of the speech signal, connected to the converting means and to the means obtaining the quantized linear prediction coefficients and comprising a pair of cascaded weighting digital filters, weighting the digital samples according to a first and a second weighting function, respectively, said first filter supplying a residual signal;
- means for the long-term analysis of the speech signal, connected to the outputs of said first filter and of the spectral shaping circuit to determine the lag which separates a current sample from a preceding sample used to process said current sample, and the gain by which said preceding sample is weighted for the processing;
- an excitation generator for determining the positions and the amplitudes of the excitation pulses, connected to said short-term and long-term analysis means and to said spectral shaping circuit;
- means for coding the values of said long-term analysis lag and gain and excitation pulse positions and amplitudes, the coded values forming, jointly with the coded representation of the linear prediction coefficients and with coded r.m.s. values of said excitation pulses, the coded speech signal;

and also comprises, for speech signal decoding (synthesis):

- means for reconstructing the excitation, the long-term analysis lag and gain and the linear prediction coefficients starting from the coded signal; and
- a synthesizer, comprising the cascade of a first long-term synthesis filter, which receives the reconstructed excitation pulses, gain and lag and filters them according to a first transfer function dependent on said gain and lag, and a short-term synthesis filter having a second transfer function which is the reciprocal of said first spectral weighting function,

and is characterized in that the long-term analysis means are apt to determine said lag and gain in two successive steps, preceding a step in which the amplitudes and positions of the excitation pulses are determined by said excitation generator, and comprise:

- a second long-term synthesis filter, which is fed with a null signal and in which, for the computation of the lag, there is used a predetermined set of values of the number of samples separating a current sample being synthesized from a previous sample used for the synthesis, and, for the gain computation, a predetermined set of possible values of the gain itself is used;
- a multiplexer receiving at a first input a residual signal sample and at a second input a sample of the output signal of the second long-term synthesis filter and supplies the samples present at either input depending on whether or not said number of samples is lower than a frame length;

- a third weighting filter, which has the same transfer function as said second digital filter of the spectral shaping circuit, is connected to the output of said second long-term synthesis filter and is enabled only during the determination of the long-term analysis gain;
- a first adder, which receives at a first input the spectrally-shaped signal and at a second input the output signal of said third weighting filter and supplies the difference between the signals present at its first and second input;
- a first processing unit, which receives in said first operation step the signal outgoing from said multiplexer and determines the optimum value of said number of samples, and in a second operation step receives the output signal of said first adder and determines, by using the lag computed in the first step, the value of the gain which minimizes the mean squared error, within a validity period of the excitation pulses, between the input signals of the first adder;

and in that the excitation generator for generating the excitation pulses comprises:

- a third long-term synthesis filter, which has the same transfer function as the first one and is fed with the excitation pulses generated;
- a fourth weighting filter, connected to the output of the third synthesis filter and having the same transfer function as said second and third weighting filters;
- a second adder, which receives at a first input the output signal of said first adder and at a second input the output signal of the fourth weighting filter, and supplies the difference between the signals present at its first and second input;
- a second processing unit which is connected to the output of said second adder and determines the amplitudes and positions of said pulses by minimizing the mean squared error, within a pulse validity period, between the input signals of the fourth adder.

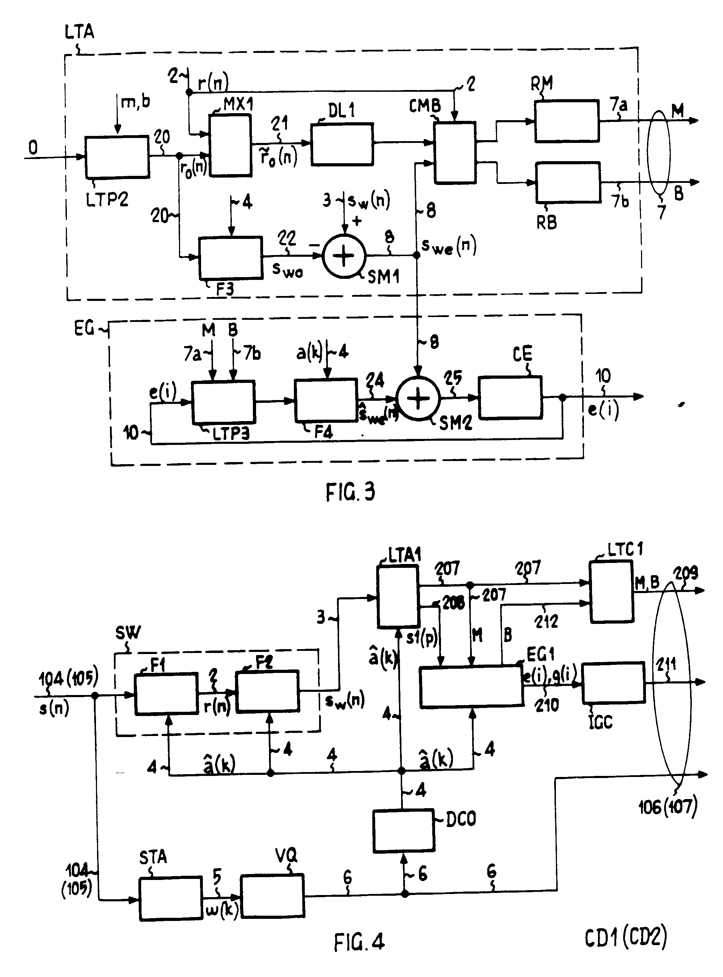

The structure of the above-described device is shown in Figs. 2 and 3, which correspond with Figs. 1 and 3 of the above-mentioned European Patent Application. The conversion means are not shown in Fig. 2, since they are external to the actual coder and are circuits CM1, CM2 of Fig. 1.

More particularly, in Fig.2:

- STA is the short-term analysis circuit, which determines linear prediction coefficients a(k) and emits a representation thereof as line spectrum pairs $\omega(k)$;
- VQ is the circuit for split-codebook vector quantization of line spectrum pairs or of the differences between adjacent line spectrum pairs;
- DCO is the circuit which reconstructs the quantized linear prediction coefficients â(k) starting from the indices of the vectors obtained as a result of the operations of VQ;
- SW is the spectral-shaping circuit comprising a pair of cascaded filters F1, F2 whose transfer functions, in z transform, are given e.g. by relations

$$A(z) = 1 - \sum_{k=1}^{q} \hat{a}(k) \cdot z^{-k}$$

$$1/A(z,\gamma) = 1/[1 - \sum_{k=1}^{q} \hat{a}(k) \cdot z^{-k} \cdot \gamma^{k}]$$

respectively, where $z^{-k}$ represents a lag of k sampling intervals; â(k) (1 <= k <= q, where q is the filter order) is a quantized linear prediction coefficient vector; $\gamma$ is an experimentally determined constant correcting factor, determining the bandwidth increase around the formants. Circuit SW as a whole has a transfer function W(z) = A(z)/A (z, $\gamma$). Residual signal r(n) is obtained on output connection 2 of F1 and spectrally-shaped speech signal $s_w(n)$ is obtained on output connection 3 of F2;
- LTA is the long-term analysis circuit, which determines lag M separating a current sample being processed from a preceding sample used to process it, and gain B by which said preceding sample is weighted for processing the current sample;
- EG is the excitation pulse generator;
- LTC, PAC are circuits for coding (quantizing) M, B and respectively the amplitudes, the positions and the r.m.s values of the excitation pulses.

In Fig.3:

- LTP2 is the long-term synthesis filter which is fed with a null signal and weights such a signal according to function

$1/P(z) = 1/(1-B \cdot z^{-M})$, generating a signal $r_0(n)$;
- MX1 is the multiplexer supplying signal $\tilde{r}_0(n)$ consisting of either signal $r_0(n)$ or residual signal $r(n)$;
- DL1 is an element introducing a delay by $\underline{m}$ samples;
- F3 is the third weighting circuit, which is enabled only during determination of B;
- SM1 is the adder which, for every sample, calculates difference $s_{we}$ between spectrally-shaped signal $s_w(n)$ and signal $s_{w0}(n)$, obtained from weighting signal $r_0(n)$ in F3;
- CMB is the processing unit which calculates the lag and the gain by minimizing the squared error

$$\sum_{n=0}^{N-1} [s_{we}(n)]^2 = \sum_{n=0}^{N-1} [s_w(n) - s_{w0}(n)]^2$$

in the above-described manner (N = number of samples during the validity period of M, B);
- RM, RB are two registers keeping values M and B available for the whole validity period chosen for the excitation pulses (e.g. half a frame);
- LTP3 is the synthesis filter fed with the excitation pulses;
- F4 is the fourth weighting filter, which emits a signal $\hat{s}_{we}(n)$ resulting from the weighting of the excitation pulses with function $1/[P(z) \cdot A(z)]$;
- SM2 is the adder supplying the difference between $s_{we}$ and $\hat{s}_{we}$;
- CE is the processing unit which determines the positions and amplitudes of the excitation pulses by minimizing the error

$$\sum_{n=0}^{N-1} [s_{we}(n) - \hat{s}_{we}(n)]^2$$

A structure very similar to the one shown in Fig. 2 can be used when CELP technique is adopted. That structure is shown in Fig. 4, where the devices having the same functions as those shown in Fig. 2 are denoted by the same references. As shown, long-term analysis circuit LTA1 receives only the spectrally-shaped signal $s_w(n)$ and the quantized linear predictions coefficients $\hat{a}(k)$, and computes only lag M optimizing its value taking into account the analyses and syntheses previously performed. Lag M is sent to coder LTC1 via connection 207. Excitation generator EG1 determines an optimum excitation model, consisting of a sequence of vectors e(i) (innovation), the corresponding gain or scale factor g(i), and gain B by which the preceding samples are weighted during long-term analysis relevant to the current sample. Gain B is sent to coder LTC1 via connection 212; a coder IGC receives from EG1 and codes indices i of the vectors of the optimum excitation model and scale factors g(i).

Supposing a frame duration of 20 ms, eight excitation vectors, each associated with the respective scale factor, may for instance be present in each frame; the long-term analysis parameters are calculated at every vector.

The vector codebook to be used for this coding technique can be determined in any way described in the literature. Preferably, however, a technique is used allowing a considerable reduction in the memory capacity needed in the excitation generator EG1 to contain such a codebook. More particularly, first a subset of the codebook (key words) is generated starting from sample pairs of amplitudes 0 or 1: if $+ \delta(p)$ is a generic sample, each key word is generated on the basis of relationship $e(i,p) = \delta(p) \delta(p-k_i)$ where $k_i$ is chosen in turn out of a subset of values 1, 2...P-1 (P = vector length, e. g. 20 samples) so that the number of key positions be less than or equal to P-1. To generate the other codewords first the two samples are shifted by a position at a time through the vector, thus obtaining a partial codebook which is then doubled by changing the sign of the second sample.

It is evident that in this case only the key words of the codebook are to be stored, while the other words could be generated during coding operations. In the particular case in which the key words are exactly P-1, the codebook becomes exhaustive as it comprises all permutations of two pulses (of unitary absolute value) within a vector of P elements.

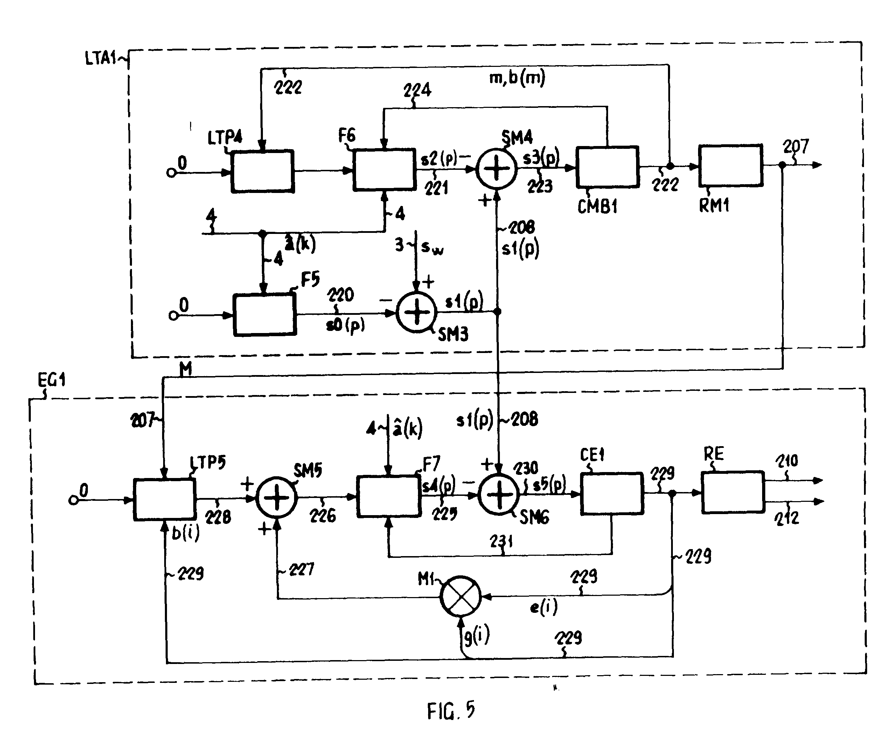

Fig. 5 shows a possible embodiment of blocks LTA1, EG1 of Fig. 4. As in the case of Fig.3, the problem is to minimize, in a perceptually meaningful way, the mean squared error between the original signal and the reconstructed one. Also in this case the optimum solution would be that of jointly determining the combination of innovation (vector and relevant gain), long-term analysis gain and long-term analysis lag which minimizes such an error. However, the optimum solution is too complex and hence, according to the invention, the computation of M is separated from the determination of the excitation (gain B of long-term analysis, vectors e(i), scale factor g(i) of said vectors).

Besides, to further simplify error minimization operations, the contribution given to the current analysis-by-synthesis operation by the preceding operations, which remains constant, is separately determined and subtracted from the spectrally-shaped signal. Therefore, the minimization uses samples s1(p) of a signal s1 obtained as difference between samples $s_w(p)$ of the spectrally-shaped signal and samples $s0(p)$ of a signal $s0$ obtained by weighting a null signal with the same function $1/A(z,\gamma)$ used during speech signal spectral shaping. Signal $s0$ represents the contribution of the preceding analyses and syntheses. Samples $s1(p)$ are present on output 208 of an adder SM3 which has an input connected to connection 3 conveying spectrally-shaped signal $s_w$, and another input connected to output 220 of a filter F5 which generates signal $s0$.

In the first step value M is to be found which minimizes mean squared error

$$ds1 = \sum_{p=0}^{P-1} [s3(p)]^2 = \sum_{p=0}^{P-1} [s1(p)-s2(p)]^2$$

where the summation extends to all P samples (e. g. 20) which form a vector of the excitation codebook. Signal $s2(p)$ is present on output 221 of a cascade of two filters LTP4, F6, whose transfer functions are analogous to those of LTP2 and F3 (Fig. 3). Even in this case long-term synthesis filter LTP4 is fed with a null signal and uses all possible values $\underline{m}$ of the lag, and for each of them, the relevant optimum gain $b(m)$. Values $\underline{m}$, $b(m)$ are supplied through a connection 222 by a processing unit CMB1 performing the mathematical operations necessary to obtain the minimum of function ds1. An adder SM4 supplies CMB1, through a connection 223, with differences $s3 = s1 - s2$. Moreover the processing unit CMB1 resets the contents of the memory of F6 at each new value m supplied to LTP4, as schematized by connection 224. Lag value M which minimizes ds1 is stored in a register RM1 for the whole validity period of long-term analysis parameters (e.g. 2,5 ms with the frame duration and the number of vectors stated above) and is kept available on connection 207.

In the second step the optimum excitation model is determined by minimizing error

$$ds2 = \sum_{p=0}^{P-1} [s5(p)]^2 = \sum_{p=0}^{P-1} [s1(p)-s4(p)]^2$$

Signal $s4(p)$ is present on output 225 of a weighting filter F7, analogous to F6: filter F7 weights by function $1/A(z,\gamma)$ the signal present on output 226 of an adder SM5, combining into a single signal the contributions given to excitation by the innovation and the long-term analysis. The first contribution is present on output 227 of a multiplier M1, which multiplies the excitation vectors $e(i)$ by a scale factor $g(i)$. The second contribution is present on output 228 of a long-term synthesis filter LTP5, analogous to LTP4, which also is fed with a null signal. LTP5 operates with lag M determined in the first step and, for each excitation vector $e(i)$, with value $b(i)$ of long-term analysis gain which is the optimum value for that vector.

Values $\underline{b}$, vectors $e(i)$ and scale factors g are supplied to LTP5 and M1 via connection 229 by a processing unit CE1 executing the mathematical operations necessary to minimize ds2. The differences $s5 = s1 - s4$ are supplied to CE1 via a connection 230 by a further adder SM6, whose inputs are connected to SM3 and F7. Also the memory of F7 is reset by CE1 at every new excitation, as schematized by connection 231. The various elements of the optimum excitation model are then stored in registers denoted as a whole by RE and kept available for coders LTC1, IGC (Fig. 4).

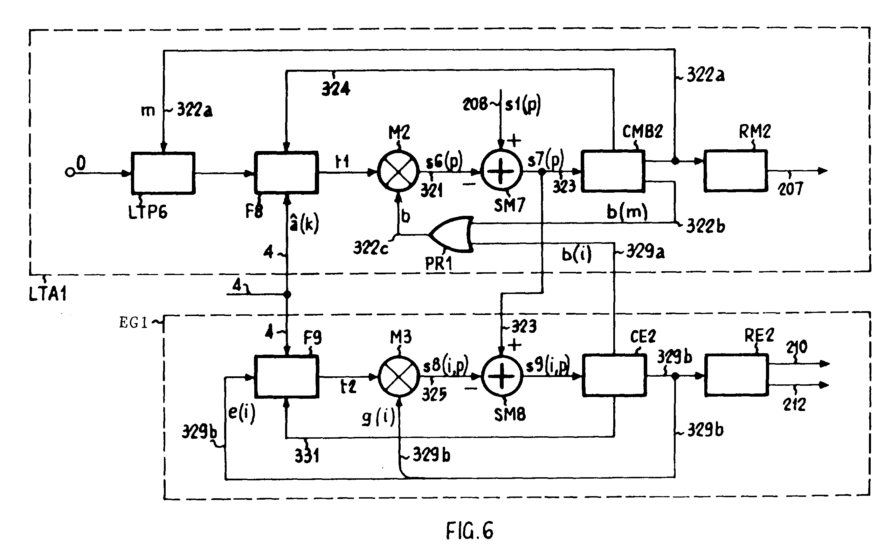

In the variant shown in Fig. 6, signal $s1(p)$ is used to determine M as in the embodiment of Fig. 5 and a mean squared error

$$ds3 = \sum_{p=0}^{P-1} [s7(p)]^2 = \sum_{p=0}^{P-1} [s1(p)-s6(p)]^2$$

is minimized, by imposing that the lag be always higher than vector length P. Signal $s6(p)$ is present on output 321 of a multiplier M2 which receives at a first input output signal t1 of a filter F8, identical to F6, which weights the output signal of a synthesis filter LTP6, fed with a null signal and having a transfer function of the type $1/P'(z)=1/(1-z^{-M})$. As in the preceding embodiment, filter LTP6 successively receives from a processing unit CMB2, analogous to CMB1, all possible values $\underline{m}$ of the lag (connection 322a). Yet no weighting of the samples with gain b is effected inside the filter, this weighting being effected, in correspondence with each value $\underline{m}$, by a multiplier M2 which receives from CMB2 optimum value $b(m)$ relevant to that value $\underline{m}$. That optimum value is implicitly determined during the computations relevant to minimization and is fed to M2 through connection 322b, OR gate PR1 and connection 322c. Value M minimizing ds3 is then rendered available on connection 207 through a register RM2, identical to RM1 (Fig. 5).

For the successive step, energy

$$ds4 = \sum_{p=0}^{P-1} [s9(i,p)]^2$$

of an error signal $s9(i,p)=s7(i,p)-s8(i,p)$ is minimized in a processing unit CE2 analogous to CE1. Signal s8 is present at the output of a multiplier M3 which receives output signal t2 of a filter F9, identical to F7 and successively fed with all possible vectors e(i), and multiplies that signal by a value g(i) of scale factor g which is the optimum value for that vector. Signal $s7(i, p)$ is signal s7 when the lag used in LTP6 is actually lag M and multiplying factor in M2 is a value b(i) of long-term analysis gain which is the optimum gain for that vector e(i). M2 is supplied by CE2 with value b(i) through connection 329 and gate PR1.

Also in this variant the memories of filters F8, F9 are reset by processing units CMB2, CE2 (connections 324, 331) at each new value m of long-term analysis lag or at each new excitation, respectively.

It is clear that what described has been given only by way of a non-limiting example and that variations and modifications are possible without going out of the scope of the invention, as defined in the following claims.

More particularly, the previous description implicitly assumes that the individual parameters of a vector are scalarly and independently quantized in IGC (Fig. 4) prior to the subsequent vector analysis. To improve quantization, scale factors g(i) could be quantized at each frame and not at each vector by using a normalization technique, e.g. with respect to the maximum or the mean value of the scale factor in the frame. Yet in such case, when passing from one vector to the next, the quantized values cannot be used because they are not yet available, whereas the quantized values are always available at the receiver. The different operation of the transmitter and the receiver entails a degradation whose effect can however be reduced, in the embodiment of Fig. 6, if said maximum or mean value is optimized at each frame so as to minimize the energy of error signal s9.

## Claims

1.  A method of coding audio signals, comprising the steps of:

    - converting the signal to be coded into digital form:
    - filtering the digital signal so as to split the total band into at least two sub-bands;
    - organizing the signals of each sub-band into frames comprising a predetermined number of samples;
    - coding the signals of each sub-band independently of those of the other sub-bands;
    - sending the coded signals onto a transmission line for transmission at medium bit rate;

    characterized in that the signals to be coded and to be split into the sub-bands are wide-band audio signals: and the signals of each sub-band are coded according to an analysis-by-synthesis technique in which the excitation signal is chosen out of a codebook of vectors (codebook excited linear prediction technique) and in which a short term analysis of the signal to be coded is effected to determine a set of linear prediction coefficients and a long term analysis is effected to determine a long-term analysis lag (pitch period) and a long-term analysis gain, the coded signals thus containing quantized information relevant to the excitation, to the linear prediction coefficients and to the long-term analysis lag and gain, wherein the long-term analysis is carried out in two subsequent steps, during a first of which an optimum value (M) of the lag is determined, while during the second step an optimum value of the long-term analysis gain is determined jointly with a sequence of excitation vectors and a scale factor for each vector, the long-term analysis gain, the sequence of vectors and the respective scale factors forming an optimum excitation model and the long term analysis lag and gain being determined for each excitation vector of the sequence, and wherein the quantized information relevant to the linear prediction coefficients is obtained through a split-codebook vector quantization of a representation of said linear prediction coefficients.

2.  A method as claimed in claim 1, characterized in that before said two steps the contribution [s0(p)] given to the analyses and syntheses relevant to a current frame by the analyses and syntheses previously performed is determined once for all by weighting a null signal by a weighting function $[1/A(z,\gamma)]$, depending on the linear prediction coefficients reconstructed after split-codebook vector quantization, and said contribution is subtracted from a first weighted signal $[s_w(p)]$, obtained by spectrally shaping the signal to be coded, thus generating a first error signal $[s1(p)]$.

3.  A method as claimed in claim 2, characterized in that for the determination of the optimum value (M) of long-term analysis lag the energy of a second error signal $[s3(p)]$ is minimized, which signal is the difference between said first error signal [s1(p)] and a second weighted signal [s2(p)], obtained by submitting a null signal to a first long-term synthesis filtering and by weighting with said weighting function the signal resulting from the synthesis filtering, said first long-term synthesis filtering being performed by using successively all possible values (m) of the long-term analysis lag and, for each of them, a corresponding optimum value [b(m)] of the long-term analysis gain; and in that, for determining the excitation, the energy of a third error signal [s5(p)] is minimized. which error signal is the difference between said first error signal and a third weighted signal [s4(p)], obtained by weighting with said weighting function $[1/A(z,\gamma)]$ a signal which is the sum of an excitation vector [e(i)], weighted by the relevant scale factor (g), and of a further signal obtained by submitting a null signal to a second long-term synthesis filtering in which the lag used is said optimum value (M) of the long term analysis lag and the gain is an optimum long-term analysis gain for said vector.

4.  A method as claimed in claim 2, characterized in that, for determining said optimum value (M) of long-term analysis lag, the energy of a fourth error signal [s7(p)] is minimized, which signal is the difference between said first error signal [s1(p)] and a fourth weighted signal [s6(p)], obtained by submitting a null signal to a third long-term synthesis filtering in which all possible values (m) of the long-term analysis lag are successively used in combination with a unitary gain, by weighting with said weighting function the signal resulting from the synthesis filtering and by multiplying the signal (t1) resulting from the weighting by a value [b(m)] of the long-term analysis gain which is the optimum gain value for that lag; and in that for said determination of the excitation the energy of a fifth error signal [s9(p)] is minimized, which signal is obtained by subtracting a fourth weighted signal [s8(p)], obtained by weighting by said weighting function $[1/A(z,\gamma)]$ all possible excitation vectors e(i) and by multiplying each weighted vector by a value [gi)] of the scale factor which is the optimum value for said vector, from a signal which consists of the fourth error signal [s7(p)] when the optimum value (M) of the long-term analysis lag and a value of the long-term analysis gain which is the optimum value for that vector are used in said third long-term synthesis filtering.

5.  A method as claimed in claim 4, characterized in that the values of the scale factors are normalized with respect to the maximum or the mean value of said factors within a frame, and at each frame said maximum or mean value is optimized so as to minimize the energy of said fifth error signal [s9(p)].

6.  A method as claimed in any of claims 1 to 5, characterized in that the excitation vector codebook is generated starting from a limited number of key vectors, each consisting of a pair of samples of unitary amplitude relevant each to a different sampling instant, the number of samples usable for generating said pairs being not higher than the number of samples which form a codebook vector.

7.  A device for coding audio signals, comprising means (CMO) for sampling the signal to be coded at a first sampling frequency which is a multiple of the maximum frequency of said signal, means (FQ1, FQ2) for filtering the sampled signal so as to split its band into adjacent sub-bands, means (CM1, CM2) for sampling the signals of each sub-band at their respective Nyquist frequency, coders (CD1, CD2) for digitally coding the sampled signals of each sub-band, and means (MX) for sending the coded signals relevant to each sub-band onto a transmission line (109) onto which the coded audio signals are transmitted at medium bit rate; <u>characterized in that</u>, for coding wide-band audio signals split into sub-bands, each coder (CD1, CD2) is an analysis-by-synthesis coder in which the excitation signal is chosen out of a codebook of vectors (codebook excited linear prediction technique) and includes means (STA, LTA1, EG1) for effecting a short-term and a long-term analysis of the audio signal of the respective sub-band and for determining an excitation signal for reproducing: each one of subsequent portions of said audio signal, the coded signal including quantized information relevant to the excitation, to linear prediction coefficients determined by the short-term analysis means (STA) and to a long-term analysis lag (pitch period) and gain; the means (LTA1, EG1) for effecting the long-term analysis and determining the excitation signal are arranged to operate in two subsequent steps, in a first of which the means for long-term analysis (LTA1) determine an optimum value for the long-term analysis lag whereas in the second step an excitation generator (EG1) determines an optimum excitation model, consisting of an optimum value of the long-term analysis gain, of a sequence of vectors chosen out of the excitation vector codebook and of a respective scale factor, said gain. excitation vectors and scale factor being jointly determined; and in that the means for short-term analysis (STA) are connected to a circuit (VQ) for split-codebook vector quantization of adjacent spectrum line pairs, or of differences between adjacent spectrum lines, obtained as a representation of linear prediction coefficients determined by the short-term analysis.

8.  A device as claimed in claim 7, characterized in that the means (LTA1) for long-term analysis comprise a first weighting filter (F5) which determines the contribution [s0(p)] given to the analyses and syntheses relevant to a current frame by the analyses and syntheses previously performed, by weighting a null signal with a weighting function $[1/A(z,\gamma)]$ depending on the linear prediction coefficients reconstructed after vector quantization, and a first adder (SM3) which subtracts said contribution from a first weighted signal [$s_w(p)$], obtained by spectrally shaping the input signals of the coder (CD1, CD2), and supplies a first error signal [$s1(p)$], used at least for determining the long-term analysis lag (M).

9. A device as claimed in claim 8, characterized in that the means (LTA1) for long-term analysis also comprises:

- a first long-term synthesis filter (LTP4), which is fed with a null signal, presents a transfer function depending on long-term analysis lag and gain and successively uses all possible lag values and, for each of them, a value [$b(m)$] of the gain which is the optimum value for said lag;
- a second weighting filter (F6) connected to the output of said first long-term synthesis filter (LTP4) and having as transfer function said weighting function:
- a second adder (SM4), which receives at a first input the first error signal [$s1(p)$] and at a second input the output signal of said second weighting filter (F6) and supplies a second error signal [$s3(p)$] which is the difference between the signals present at its first and second inputs:
- a first processing unit (CMB1), which successively supplies said first synthesis filter (LTP4) with all possible values (m) of the long-term analysis lag, receives said second error signal and determines the value of the lag which minimizes the energy thereof and forms the optimum lag (M), the processing unit resetting at each new value of the lag the memory of said second weighting filter (F6);

and in that the means (EG1) for determining the optimum excitation model comprises:

- a second long-term synthesis filter (LTP5), which is fed with a null signal. presents a transfer function analogous to that of the first synthesis filter (LTP4) and uses the optimum lag value (M) and a value [$b(i)$] of the gain which is the optimum value for a given excitation vector [$e(i)$]:
- a third adder (SM5) which adds the output signal of said second synthesis filter (LTP5) and the output signal of a first multiplier (M1) which multiplies an excitation vector by a respective scale factor;
- a third weighting filter (F7), connected to the output of said third adder (SM5) and having as transfer function said weighting function [$1/A(z,\gamma)$];
- a fourth adder (SM6), which receives at a first input the first error signal [$s1(p)$] and at a second input the output signal [$s4(p)$] of said third weighting filter (F7) and supplies a third error signal [$s5(p)$], which is the difference between the signals present at its first and second inputs;
- a second processing unit (CE1) which supplies said second synthesis filter (LTP5) with the gain value [$b(i)$] and said first multiplier (M1) with the vectors and scale factors, receives said third error signal [$s5(p)$] and determines the combination of gain (B), excitation vectors and respective scale factors forming the optimum excitation model by minimizing the energy of said third error signal, the second processing unit (CE1) resetting at each new combination of gain, vector and scale factor the memories of the third weighting filter (F7).

10. A device as claimed in claim 8, characterized in that the means (LTA1) for long-term analysis further comprises:

- a third long-term synthesis filter (LTP6), which has a transfer function depending on the long-term analysis lag, is fed with a null signal and, while determining the optimum long-term analysis lag, successively uses all possible lag values, whereas, while determining the optimum excitation model, uses the optimum lag value;
- a fourth weighting filter (F8), connected to the output of said third long-term synthesis filter (LTP6) and having as transfer function said weighting function;
- a second multiplier (M2) which is connected to the output of the fourth weighting filter (F8) and which, during determination of the optimum long-term analysis lag, for each value of the lag used in the third synthesis filter (LTP6), multiplies the output signal (t1) of said fourth weighting filter (F8) by a value [$b(m)$] of the long-term analysis gain which is the optimum value for that lag, whereas during determination of the optimum excitation model, it multiplies the output signal of said fourth filter (F8) by a value ($b(i)$] of the long-term analysis gain which is the optimum value for a given excitation vector;
- a fifth adder (SM7), which receives at a first input the first error signal [$s1(p)$] and at a second input the output signal of said second multiplier (M2) and supplies a fourth error signal ($s7(p)$], consisting of the difference between the signals present at the first and second inputs;
- a third processing unit (CMB2), which supplies successively said third synthesis filter (LTP6) with all possible values (m) of the long-term analysis lag, resetting at each new value the memory of the fourth weighting filter (F8), and, while determining the optimum lag, supplies the second multiplier (M2) with the values of the gain [$b(m)$], receives said fourth error signal and determines the lag value which minimizes the energy of the fourth error signal and forms the optimum lag (M);

and in that the means (EG1) for determining optimum long-term analysis gain (B), the vectors e(i) and their respective scale factors (g), forming the optimum excitation model, comprise:

- a fifth weighting filter (F9), fed with the excitation vectors and having as transfer function said weighting function;
- a third multiplier (M3), which is connected to the output of the fifth weighting filter (F9) and, for each vector supplied to such fifth weighting filter, multiplies the output signal of the filter (F9) by an optimum scale factor;
- a sixth adder (SM8), which receives at a first input the fourth error signal [s7(p)] and at a second input the output signal (s8(p)) of said fifth weighting filter (F9) and generates a fifth error signal [s9(p)], consisting of the difference between the signals present at the first and second inputs:
- a fourth processing unit (CE2), which supplies said fifth weighting filter (F9) with the excitation vectors, said third multiplier (M3) with the optimum scale factor for each vector supplied to said fifth weighting fiiter (F9) and said second multiplier (M2) with the optimum long-term analysis gain for that vector, receives said fifth error signal [s9(p)] and determines the combination long-term analysis gain (B), excitation vectors and respective scale factors which forms the optimum excitation model by minimizing the energy of said fifth error signal [s9(p)], the fourth processing unit resetting the memories of the fifth weighting filter (F9) at each new combination vector, scale factor, long-term analysis gain.

11. A device as claimed in claim 9 or 10, characterized in that said second and fourth processing units (CE1, CE2) are arranged to generate the excitation vector codebook starting from a limited number of key vectors, each consisting of a pair of samples of unitary amplitude each related to a different sampling instant, the number of samples usable for generating said pairs being not higher than the number of samples which form a codebook vector.

12. A device as claimed in claim 10, characterized in that said second processing unit (CE1) is arranged to supply said first multiplier (M1) with values of the scale factors which are normalized with respect to the maximum or the mean value of said factors within a frame, and to optimise at each frame said maximum or mean value so as to minimize the energy of said fifth error signal.

## Patentansprüche

1. Verfahren zum Codieren von Audiosignalen, mit folgenden Verfahrensschritten:

   - Umwandeln des zu codierenden Signals in digitale Form;
   - Filtern des digitalen Signals so, daß das gesamte Band in wenigstens zwei Teilbänder aufgespalten wird;
   - Organisieren der Signale jedes Teilbands in Rahmen, die eine gegebene Anzahl von Abtastwerten umfassen;
   - Codieren der Signale jedes Teilbands unabhängig von denen der anderen Teilbänder;
   - Senden der codierten Signale auf eine Übertragungsleitung für eine Übertragung mit mittlerer Bit-Rate;

   dadurch gekennzeichnet, daß die zu codierenden und in die Teilbänder aufzuspaltenden Signale breitbandige Audiosignale sind; und daß man die Signale jedes Teilbands gemäß einer Analyse-durch-Synthese-Technik codiert, bei der das Erregungssignal aus einem Codebuch von Vektoren (codebuch-erregte Linearprädiktions-Technik) ausgewählt wird und man eine Kurzzeitanalyse des zu codierenden Signals bewirkt, um eine Gruppe von Linearprädiktions-Koeffizienten zu bestimmen, und eine Langzeitanalyse bewirkt, um einen Langzeitanalyse-Nachlauf (Schrittperiode) und eine Langzeitanalyse-Verstärkung zu bestimmen, so daß die codierten Signale quantisierte Informationen bezüglich der Erregung, der Linearprädiktions-Koeffizienten und des Langzeitanalyse-Nachlaufs sowie der Langzeitanalyse-Verstärkung enthalten; wobei man die Langzeitanalyse in zwei aufeinanderfolgenden Schritten durchführt und während des ersten dieser Schritte einen Optimumwert (M) des Nachlaufs bestimmt, während man während des zweiten Schritts einen Optimumwert der Langzeitanalyse-Verstärkung gemeinsam mit einer Folge von Erregungsvektoren und einem Skalenfaktor für jeden Vektor bestimmt; und wobei die Langzeitanalyse-Verstärkung, die Folge von Vektoren und die jeweiligen Skalenfaktoren ein Optimum-Erregungsmodell bilden, man den Langzeitanalyse-Nachlauf und die Langzeitanalyse-Verstärkung für jeden Erregungsvektor der Folge bestimmt, und man die auf die Linearprädiktions-Koeffizienten bezogene quantisierte Information durch eine Vektorquantisierung mit gespaltenem Codebuch einer Repräsentation der Linearprädiktions-Koeffizienten erhält.

2. Verfahren nach Anspruch 1, dadurch gekennzeichnet, daß man vor diesen beiden Schritten den Beitrag [s0(p)] durch früher durchgeführte Analysen und Synthesen, den man den auf einen gegenwärtigen Rahmen bezogenen Analysen und Synthesen gibt, einmal für alle bestimmt, indem man ein Nullsignal durch eine Gewichtungsfunktion [1/A(z,γ)] gewichtet, die von den Linearprädiktions-Koeffizienten abhängt, die nach einer Vektorquantisierung mit gespaltenem Codebuch rekonstruiert sind, und daß man diesen Beitrag von einem ersten gewichteten Signal [$s_w$(p)] subtrahiert, das man durch spektrale Formung des zu codierenden Signals erhält, wodurch man ein erstes Fehlersignal [s1(p)] erzeugt.

3. Verfahren nach Anspruch 2, dadurch gekennzeichnet, daß man für die Bestimmung des Optimumwerts (M) des Langzeitanalyse-Nachlaufs die Energie eines zweiten Fehlersignals [s3(p)] minimiert, das die Differenz zwischen dem ersten Fehlersignal [s1(p)] und einem zweiten gewichteten Signal [s2(p)] ist, welches man dadurch erhält, daß man ein Nullsignal einer ersten Langzeitsynthesefilterung unterwirft und mit der Gewichtungsfunktion das aus der Synthesefilterung resultierende Signal gewichtet, wobei man die erste Langzeit-synthesefilterung durchführt, indem man aufeinanderfolgend alle möglichen Werte (m) des Nachlaufs der Langzeitanalyse verwendet und für jeden von ihnen einen entsprechenden Optimumwert [b(m)] der Langzeitanalyse-Verstärkung verwendet; und daß man durch Bestimmung der Erregung die Energie eines dritten Fehlersignals [s5(p)] minimiert, das die Differenz zwischen dem ersten Fehlersignal und einem dritten gewichteten Signal [s4(p)] ist, welches man durch Gewichten mit der Gewichtungsfunktion [1/A(z,γ)] eines Signals erhält, das die Summe eines Erregungsvektors [e(i)], der vom betreffenden Skalenfaktor (g) gewichtet ist, und eines weiteren Signals ist, das man dadurch erhält, daß man ein Nullsignal einer zweiten Langzeitsynthesefilterung unterwirft, bei der der verwendete Nachlauf der Optimumwert (M) des Langzeitanalyse-Nachlaufs und die Verstärkung eine Optimum-Langzeitanalyse-Verstärkung für diesen Vektor ist.

4. Verfahren nach Anspruch 2, dadurch gekennzeichnet, daß man für die Bestimmung des Optimumwerts (M) des Langzeitanalyse- Nachlaufs die Energie eines vierten Fehlersignals [s7(p)] minimiert, das die Differenz zwischen dem ersten Fehlersignal [s1(p)] und einem vierten gewichteten Signal [s6(p)] ist, welches man dadurch erhält, daß man ein Nullsignal einer dritten Langzeitsynthesefilterung unterwirft, bei der man aufeinanderfolgend alle möglichen Werte (m) des der Langzeitanalyse-Nachlaufs in Kombination mit einer Einheitsverstärkung verwendet, das aus der Synthesefilterung resultierende Signal mit der Gewichtungsfunktion gewichtet und das aus der Gewichtung resultierende Signal (t1) mit einem Wert [b(m)] der Langzeitanalyse-Verstärkung, der den Optimum-Verstärkungswert für diesen Nachlauf darstellt, multipliziert; und daß man für die Bestimmung der Erregung die Energie eines fünften Fehlersignals [s9(p)] minimiert, das man dadurch erhält, daß man ein viertes gewichtetes Signal [s8(p)] von einem weiteren Signal subtrahiert, wobei man das vierte gewichtete Signal erhält durch Gewichtung aller möglichen Erregungsvektoren e(i) mit der Gewichtungsfunktion [1/A(z,γ)] und durch Multiplizieren jedes gewichteten Vektors mit einem Wert [g(i)] des Skalenfaktors, der den Optimumwert für diesen Vektor darstellt, und das weitere Signal aus dem vierten Fehlersignal [s7(p)] besteht, wenn der Optimumwert (M) des Langzeitanalyse-Nachlaufs und ein Wert der Langzeitanalyse-Verstärkung, der den Optimumwert für diesen Vektor darstellt, bei der dritten Langzeitsynthesefilterung verwendet werden.

5. Verfahren nach Anspruch 4, dadurch gekennzeichnet, daß man die Werte des Skalenfaktors in Bezug zum Maximum oder Mittelwert dieses Faktors innerhalb eines Rahmens normalisiert und man in jedem Rahmen dieses Maximum oder diesen Mittelwert so optimiert, daß die Energie des fünften Fehlersignals [s9(p)] minimiert wird.

6. Verfahren nach einem der Ansprüche 1 bis 5, dadurch gekennzeichnet, daß man das Erregungsvektor-Codebuch erzeugt, indem man von einer beschränkten Zahl von Schlüsselvektoren ausgeht, von denen jeder aus einem Paar von Abtastwerten mit Einheitsamplitude bestehen, die jeweils für einen anderen Abtastzeitpunkt relevant sind, wobei die Anzahl der zur Erzeugung dieser Paare verwendbaren Abtastwerte nicht höher ist als die Anzahl der Abtastwerte, die einen Codebuchvektor bilden.

7. Vorrichtung zum Codieren von Audiosignalen, mit Einrichtungen (CMO) zum Abtasten des zu codierenden Signals mit einer ersten Abtastfrequenz, die ein Vielfaches der Maximalfrequenz dieses Signals ist, Einrichtungen (FQ1, FQ2) zum Filtern des abgetasteten Signals so, daß dessen Band in aneinander angrenzende Teilbänder aufgespalten wird, Einrichtungen (CM1, CM2) zum Abtasten der Signale jedes Teilbands mit ihrer jeweiligen Nyquist-Frequenz, Codierern (CD1, CD2) zum digitalen Codieren der abgetasteten Signale jedes Teilbands, und Einrichtungen (MX) zum Senden der codierten Signale, die sich auf jedes Teilband beziehen, auf eine Übertragungsleitung (109), auf die die codierten Audiosignale mit einer mittleren Bit-Rate gesendet werden; dadurch gekennzeichnet, daß zum Codieren von breitbandigen Audiosignalen, die in Teilbänder aufgespalten sind, jeder Codierer (CD1, CD2) ein Analyse-durch-Synthese-Codierer ist, in dem das Erregungssignal aus einem Codebuch von Vektoren (codebuch-erregte Linearprädiktions-Technik) ausgewählt ist, und Einrichtungen (STA, LTA1, EG1) zum Bewirken einer Kurzzeitanalyse und einer Langzeitanalyse des Audiosignals des betreffenden Teilbands und zum Bestimmen eines Erregungssignals für die Wiederherstellung folgender Signale enthält: jedes der aufeinanderfolgenden Audiosignal-Teile, sowie des codierten Signals einschließlich quantisierter Informationen, die sich auf die Erregung, die Linearprädiktions-Koeffizienten, die durch die Kurzzeitanalyse-Einrichtung (STA) bestimmt sind, den Langzeitanalyse-Nachlauf (Schrittperiode) und die Langzeitanalyse-Verstärkung beziehen; daß die Einrichtungen (LTA1, EG1) zum Bewirken der Langzeitanalyse und zum Bestimmen des Erregungssignals dazu ausgebildet sind, in zwei aufeinanderfolgenden Schritten zu arbeiten, wobei im ersten dieser Schritte die Einrichtung zur Langzeitanalyse (LTA1) einen Optimumwert des Langzeitanalyse-Nachlaufs bestimmt, während im zweiten Schritt ein Erregungsgenerator (EG1) ein Optimum-Erregungsmodell bestimmt, das aus einem Optimumwert der Langzeitanalyse-Verstärkung, einer Folge von Vektoren, die aus dem Erregungsvektor-Codebuch ausgewählt sind, und einem jeweiligen Skalenfaktor besteht, wobei die Verstärkung, die Erregungsvektoren und der Skalenfaktor gemeinsam bestimmt werden; und daß die Einrichtung zur Kurzzeitanalyse (STA) mit einer Schaltung (VQ) für die Quantisierung der Vektoren des geteilten Codebuchs von benachbarten Spektrumlinienpaaren oder von Differenzen zwischen benachbarten Spektrumslinien, die als eine Wiedergabe Linearprädiktions-Koeffizienten, die durch die Kurzzeitanalyse bestimmt sind, erhalten werden, verbunden ist.

8. Vorrichtung nach Anspruch 7, dadurch gekennzeichnet, daß die Einrichtung (LTA1) zur Langzeitanalyse umfaßt: ein erstes Gewichtungsfilter (F5), das den gegebenen Beitrag [s0(p)] zu den Analysen und Synthesen, die sich auf einen gegenwärtigen Rahmen aufgrund der vorher durchgeführten Analysen und Synthesen beziehen, durch Gewichten eines Nullsignals mit einer Gewichtungsfunktion [1/A(z,γ)] in Abhängigkeit von den Linearprädiktions-Koeffizienten, die nach der Vektorquantisierung rekonstruiert sind, bestimmt; und einen ersten Addierer (SM3), der diesen Beitrag von einem ersten gewichteten Signal [$s_w$(p)], das von der spektralen Formung des Eingangssignals des Codierers (CD1, CD2) erhalten wird, subtrahiert und ein erstes Fehlersignal [s1(p)] liefert, das zumindest zur Bestimmung des Langzeitanalyse-Nachlaufs (M) dient.

9. Vorrichtung nach Anspruch 8, dadurch gekennzeichnet, daß die Einrichtung (LTA1) zur Langzeitanalyse weiterhin folgende Teile umfaßt:

- ein erstes Langzeitsynthesefilter (LTP4), das mit einem Nullsignal gespeist ist, eine Transferfunktion in Abhängigkeit vom Nachlauf und der Verstärkung der Langzeitanalyse hat und aufeinanderfolgend alle möglichen Nachlaufwerte und für jeden von ihnen einen Verstärkungswert [b(m)], der den Optimumwert für diesen Nachlauf darstellt, verwendet;
- ein zweites Gewichtungsfilter (F6), das mit dem Ausgang des ersten Langzeitsynthesefilters (LTP4) verbunden ist und als Transferfunktion die Gewichtungsfunktion hat;
- einen zweiten Addierer (SM4), der an einem ersten Eingang das erste Fehlersignal [s1(p)] und an einem zweiten Eingang das Ausgangssignal des zweiten Gewichtungsfilters (F6) empfängt und ein zweites Fehlersignal [s3(p)] abgibt, das die Differenz zwischen den an seinem ersten und an seinem zweiten Eingang anliegenden Signalen ist;
- eine erste Verarbeitungseinheit (CMB1), die aufeinanderfolgend das erste Synthesefilter (LTP4) mit allen möglichen Werten (m) des Langzeitanalyse-Nachlaufs beliefert, das zweite Fehlersignal empfängt und den Wert des Nachlaufs, der dessen Energie minimiert und den Optimum-Nachlauf (M) bildet, bestimmt, wobei die Verarbeitungseinheit bei jedem neuen Wert des Nachlaufs den Speicher des zweiten Gewichtungsfilters (F6) zurückstellt;

und daß die Einrichtung (EG1) zum Bestimmen des Optimum-Erregungsmodells folgende Teile umfaßt:

- ein zweites Langzeitsynthesefilter (LTP5), das mit einem Nullsignal gespeist ist, eine Transferfunktion analog der des ersten Synthesefilters (LTP4) aufweist und den Optimum-Nachlaufwert (M) und den Wert [b(i)] der Verstärkung, der der Optimumwert für einen gegebenen Erregungsvektor [e(i)] ist, verwendet;
- einen dritten Addierer (SM5), der das Ausgangssignal des zweiten Synthesefilters (LTP5) und das Ausgangssignal eines ersten Multiplizierers (M1), der einen Erregungsvektor mit einem entsprechenden Skalenfaktor multipliziert, addiert;

ferfunktion die Gewichtungsfunktion [1/A(z,γ)] hat;

- einen vierten Addierer (SM6), der an einem ersten Eingang das erste Fehlersignal [s1(p)] und an einem zweiten Eingang das Ausgangssignal [s4(p)] des dritten Gewichtungsfilters (F7) empfängt und ein drittes Fehlersignal [s5(p)] abgibt, das die Differenz zwischen den an seinem ersten und zweiten Eingang anliegenden Signalen ist;
- eine zweite Verarbeitungseinheit (CE1), die das zweite Synthesefilter (LTP5) mit dem Verstärkungswert [b(i)] und den ersten Multiplizierer (M1) mit den Vektoren und Skalenfaktoren speist, das dritte Fehlersignal [s5(p)] empfängt und die Kombination von Verstärkung (B), Erregungsvektoren und jeweiligen Skalenfaktoren, die das Optimum-Erregungsmodell durch Minimierung der Energie des dritten Fehlersignals bilden, bestimmt und außerdem bei jeder neuen Kombination von Verstärkung, Vektor und Skalenfaktor die Speicher des dritten Gewichtungsfilters (F7) zurückstellt.

10. Vorrichtung nach Anspruch 8, dadurch gekennzeichnet, daß die Einrichtung (LTA1) zur Langzeitanalyse weiterhin folgende Teile umfaßt:

- ein drittes Langzeitsynthesefilter (LTP6), das eine Transferfunktion in Abhängigkeit vom Nachlauf der Langzeitanalyse hat, mit einem Nullsignal gespeist ist und während der Bestimmung des Optimum-Nachlaufs der Langzeitanalyse aufeinanderfolgend alle möglichen Nachlaufwerte verwendet, jedoch während der Bestimmung des Optimum-Erregungsmodells den Optimum-Nachlaufwert verwendet;
- ein viertes Gewichtungsfilter (F8), das mit dem Ausgang des dritten Langzeitsynthesefilters (LTP6) verbunden ist und als Transferfunktion die Gewichtungsfunktion hat;
- einen zweiten Multiplizierer (M2), der mit dem Ausgang des vierten Gewichtungsfilters (F8) verbunden ist und während der Bestimmung des Optimum-Nachlaufs der Langzeitanalyse für jeden Nachlaufwert, der im dritten Synthesefilter (LTP6) verwendet wird, das Ausgangssignal (t1) des vierten Gewichtungsfilters (F8) mit einem Wert [b(m)] der Langzeitanalyse-Verstärkung, der der Optimumwert für diesen Nachlauf ist, multipliziert, jedoch während der Bestimmung des Optimum-Erregungsmodells das Ausgangssignal des vierten Filters (F8) mit dem Wert [b(i)] der Langzeitanalyse-Verstärkung, die der Optimumwert für einen gegebenen Erregungsvektor ist, multipliziert;
- einen fünften Addierer (SM7), der an einem ersten Eingang das erste Fehlersignal [s1(p)] und an einem zweiten Eingang das Ausgangssignal des zweiten Multiplizierers (M2) empfängt und ein viertes Fehlersignal [s7(p)] abgibt, das aus der Differenz zwischen den an seinem ersten und an seinem zweiten Eingang anliegenden Signalen besteht;
- eine dritte Verarbeitungseinheit (CMB2), die aufeinanderfolgend das dritte Synthesefilter (LTP6) mit allen möglichen Werten (m) des Langzeitanalyse-Nachlaufs beliefert, wobei sie bei jedem neuen Wert den Speicher des vierten Gewichtungsfilters (F8) zurückstellt, jedoch während der Bestimmung des Optimum-Nachlaufs den zweiten Multiplizierer (M2) mit den Werten der Verstärkung [b(m)] beliefert, das vierte Fehlersignal empfängt und denjenigen Nachlaufwert bestimmt, der die Energie des vierten Fehlersignals minimiert und den Optimum-Nachlauf (M) bildet;

und daß die Einrichtung (EG1) zum Bestimmen des Optimums der Langzeitanalyse-Verstärkung (B), des Vektors e(i) und ihrer jeweiligen Skalenfaktoren (g), die das Optimum der Erregungsmodells bilden, folgende Teile umfaßt:

- ein fünftes Gewichtungsfilter (F9), das mit den Erregungsvektoren gespeist ist und als Transferfunktion die Gewichtungsfunktion hat;
- einen dritten Multiplizierer (M3), der mit dem Ausgang des fünften Gewichtungsfilters (F9) verbunden ist und für jeden Vektor, der an diesen fünften Gewichtungsfilter geliefert wird, das Ausgangssignal des Filters (F9) mit einem Optimum-Skalenfaktor multipliziert;
- einen sechsten Addierer (SM8), der an einem ersten Eingang das vierte Fehlersignal [s7(p)] und an einem zweiten Eingang das Ausgangssignal [s8(p)] des fünften Gewichtungsfilters (F9) empfängt und ein fünftes Fehlersignal [s9(p)] erzeugt, das aus der Differenz zwischen den am ersten und am zweiten Eingang anliegenden Signalen besteht;
- eine vierte Verarbeitungseinheit (CE2), die das fünfte Gewichtungsfilter (F9) mit den Erregungsvektoren, den dritten Multiplizierer (M3) mit dem Optimum-Skalenfaktor für jeden vom fünften Gewichtungsfilter (F9) gelieferten Vektor und den zweiten Multiplizierer (M2) mit der Optimum-Verstärkung der Langzeitanalyse für diesen Vektor beliefert, das fünfte Fehlersignal [s9(p)] empfängt und die Kombination der Langzeitanalyse-Verstärkung (B), der Erregungsvektoren und der jeweiligen Skalenfaktoren bestimmt, die das Optimum Erregungsmodell bildet, indem sie die Energie des fünften Fehlersignals [s9(p)] minimiert, wobei die vierte Verarbeitungseinheit die Speicher des fünften Gewichtungsfilters (F9) bei jeder neuen Kombination von Vektor, Skalenfaktor und Langzeitanalyse-Verstärkung zurückstellt.

11. Vorrichtung nach Anspruch 9 oder 10, dadurch gekennzeichnet, daß die zweite Verarbeitungseinheit (CE1) und die vierte Verarbeitungseinheit (CE2) dazu aufgebaut sind, das Erregungsvektor-Codebuch ausgehend von einer begrenzten Anzahl von Schlüsselvektoren, von denen jeder aus einem Paar von Abtastwerten einheitlicher Amplitude besteht, die sich auf einen anderen Abtastzeitpunkt beziehen, zu erzeugen, wobei die Zahl der zur Erzeugung der Paare verwendbaren Abtastwerte nicht höher ist als die Zahl der Abtastwerte, die einen Codebuch-Vektor bilden.

12. Vorrichtung nach Anspruch 10, dadurch gekennzeichnet, daß die zweite Verarbeitungseinheit (CE1) dazu aufgebaut ist, den ersten Multiplizierer (M1) mit Werten des Skalenfaktors zu beliefern, die in Bezug zum Maximum oder zum Mittelwert der Skalenfaktoren innerhalb eines Rahmens normalisiert sind, und bei jedem Rahmen den Maximumwert oder den Mittelwert so zu optimieren, daß die Energie des fünften Fehlersignals minimiert wird.

**Revendications**

1. Procédé de codage de signaux audio, comprenant les opérations de:

   - convertir le signal à coder en forme numérique;
   - filtrer le signal numérique de manière à subdiviser la bande totale en au moins deux sous-bandes;
   - organiser les signaux de chaque sous-bande en trames d'échantillons comprenant un nombre prédéterminé d'échantillons;
   - coder les signaux de chaque sous-bande indépendamment de ceux des autres sous-bandes; et
   - envoyer le signaux codés sur une ligne de transmission pour la transmission à débit moyen;

   caractérisé en ce que les signaux à coder et à subdiviser en les sous-bandes sont des signaux audio à large bande; et les signaux de chaque sous-bande sont codés par une technique d'analyse par synthèse dans laquelle le signal d'excitation est choisi dans un dictionnaire de vecteurs (technique à prédiction linéaire à excitation par codes) et dans laquelle on effectue une analyse à court terme du signal à coder pour déterminer un ensemble de coefficients de prédiction linéaire et on effectue une analyse à long terme pour déterminer un retard de l'analyse à long terme (période fondamentale) et un gain de l'analyse à long terme, de sorte que le signal codé comprend des informations quantifiées relatives à l'excitation, aux coefficients de prédiction linéaire et au retard et au gain de l'analyse à long terme; l'analyse à long terme étant effectuée en deux phases successives, dans la première desquelles on détermine une valeur optimale (M) du retard tandis que pendant la seconde phase on détermine une valeur optimale du gain de l'analyse à long terme ensemble à une séquence de vecteurs d'excitation et à un facteur d'échelle pour chaque vecteur, le gain de l'analyse à long terme, la séquence de vecteurs et les facteurs d'échelle respectifs constituant un modèle optimal d'excitation, et le retard et le gain de l'analyse à long terme étant déterminés pour chaque vecteur d'excitation de la séquence; et l'information quantifiée relative aux coefficients de prédiction linéaire étant obtenue à l'aide d'une quantification vectorielle à dictionnaire subdivisé d'une représentation de ces coefficients de prédiction linéaire.

2. Procédé selon la revendication 1, caractérisé en ce qu'avant ces deux phases on détermine une fois pour toutes la contribution [sO(p)] fournie aux analyses et synthèses relatives à une trame courante par les analyses et synthèses effectuées précédemment, en pondérant un signal nul par une fonction de pondération [$1/A(z,\gamma)$], qui dépend des coefficients de prédiction linéaire reconstitués après la quantification vectorielle à dictionnaire subdivisé, et on soustrait cette contribution d'un premier signal pondéré [$s_w(p)$], obtenu par mise en forme spectrale du signal à coder, en engendrant ainsi un premier signal d'erreur [s1(p)].

3. Procédé selon la revendication 2, caractérisé en ce que, pour la détermination de la valeur optimale (M) du retard de l'analyse à long terme, on minimise l'énergie d'un deuxième signal d'erreur [s3(p)], qui est la différence entre le premier signal d'erreur [s1(p)] et un second signal pondéré [s2(p)], obtenu en soumettant un signal nul à un premier filtrage de synthèse à long terme et en pondérant par ladite fonction de pondération le signal résultant du filtrage de synthèse, le premier filtrage de synthèse à long terme étant effectué en utilisant successivement toutes les valeurs possibles (m) du retard de l'analyse à long terme et, pour chacune d'elles, une valeur optimale [b(m)] correspondante du gain de l'analyse à long terme; et en ce que, pour la détermination de l'excitation, on minimise l'énergie d'un troisième signal d'erreur [s5(p)], qui est la différence entre le premier signal d'erreur et un troisième signal pondéré [s4(p)], obtenu en pondérant par ladite fonction de pondération [$1/A(z,\gamma)$] un signal qui est la somme d'un vecteur d'excitation [e(i)], pondéré par le facteur d'échelle (g) respectif, et d'un signal ultérieur obtenu en soumettant un signal nul à un second filtrage de synthèse à long terme, dans lequel le retard utilisé est la valeur optimale (M) du retard de l'analyse à long terme et le gain est un gain de l'analyse à long terme optimal pour ce vecteur.

4. Procédé selon la revendication 2, caractérisé en ce que, pour la détermination de la valeur optimale (M) du retard

17

de l'analyse à long terme, on minimise l'énergie d'un quatrième signal d'erreur [s7(p)], qui est la différence entre le premier signal d'erreur [s1(p)] et un quatrième signal pondéré [s6(p)], obtenu en soumettant un signal nul à un troisième filtrage de synthèse à long terme, dans lequel on utilise successivement toutes les valeurs possibles (m) du retard de l'analyse à long terme en combinaison avec un gain unitaire, en pondérant par ladite fonction de pondération le signal résultant du filtrage de synthèse, et en multipliant le signal (t1) résultant de la pondération par une valeur [b(m)] du gain de l'analyse à long terme qui est la valeur optimale du gain pour ce retard; et en ce que, pour la détermination de l'excitation, on minimise l'énergie d'un cinquième signal d'erreur [s9(p)], obtenu en soustrayant un quatrième signal pondéré [s8(p)], obtenu en pondérant tous les vecteurs d'excitation possibles e (i) par ladite fonction de pondération [1/A(z,γ)] et en multipliant chaque vecteur pondéré par une valeur [g(i)] du facteur d'échelle qui est la valeur optimale pour ce vecteur, d'un signal qui est constitué par le quatrième signal d'erreur [s7(p)] lorsque pendant le troisième filtrage de synthèse à long terme on utilise la valeur optimale (M) du retard de l'analyse à long terme et une valeur du gain de l'analyse à long terme qui est la valeur optimale pour ce vecteur.

5. Procédé selon la revendication 4, caractérisé en ce que les valeurs des facteurs d'échelle sont normalisées par rapport à la valeur maximale ou à la valeur moyenne de ces facteurs dans une trame, et à chaque trame on optimise cette valeur maximale ou moyenne de manière à minimiser l'énergie du cinquième signal d'erreur [s9(p)].

6. Procédé selon l'une quelconque des revendications 1 à 5, caractérisé en ce que le dictionnaire des vecteurs d'excitation est engendré à partir d'un nombre limité de vecteurs clé, chacun constitué par une paire d'échantillons d'amplitude unitaire relatifs chacun à un instant d'échantillonnage différent, le nombre d'échantillons utilisables pour la création des paires étant non supérieur au nombre d'échantillons qui constituent un vecteur du dictionnaire.

7. Dispositif pour le codage de signaux audio, comprenant des moyens (CM0) pour échantillonner le signal à coder à une première fréquence d'échantillonnage, qui est un multiple de la fréquence maximale de ce signal, des moyens (FQ1, FQ2) pour filtrer le signal échantillonné de manière à en subdiviser la bande en sous-bandes contiguës, des moyens (CM1, CM2) pour échantillonner les signaux de chaque sous-bande à la fréquence de Nyquist correspondante, des codeurs (CD1, CD2) pour coder en forme numérique les signaux échantillonnés de chaque sous-bande, et des moyens (MX) pour envoyer les signaux codés relatifs à chaque sous-bande sur une ligne de transmission (109) sur laquelle les signaux codés sont transmis à débit moyen; <u>caractérisé en ce que</u>, pour coder des signaux audio à large bande subdivisés en sous-bandes, chaque codeur (CD1, CD2) est un codeur d'analyse par synthèse dans lequel le signal d'excitation est choisi dans un dictionnaire de vecteurs (technique à prédiction linéaire à excitation par codes) et comprend des moyens (STA, LTA1, EG1) pour effectuer une analyse à court terme et à long terme du signal audio de la sous-bande respective et pour déterminer un signal d'excitation pour reproduire chacune de parties successives du signal audio, le signal codé comprenant des informations quantifiées relatives à l'excitation, aux coefficients de prédiction linéaire déterminés par les moyens (STA) d'analyse à court terme et à un retard (période fondamentale) et à un gain de l'analyse à long terme; les moyens (LTA1, EG1) pour effectuer l'analyse à long terme et déterminer le signal d'excitation sont aptes à opérer en deux phases successives, dans la première desquelles les moyens (LTA1) d'analyse à long terme déterminent une valeur optimale du retard de l'analyse à long terme, tandis que pendant la seconde phase un générateur d'excitation (EG1) détermine un modèle optimal d'excitation, constitué par une valeur optimale du gain de l'analyse à long terme, par une séquence de vecteurs choisis dans le dictionnaire des vecteurs d'excitation et par un facteur d'échelle respectif, le gain, les vecteurs d'excitation et le facteur d'échelle étant déterminés ensemble; et en ce que les moyens (STA) d'analyse à court terme sont connectés à un circuit (VQ) pour la quantification vectorielle à dictionnaire subdivisé de paires de raies spectrales adjacentes, ou de différences entre raies spectrales adjacentes, obtenues comme représentation de coefficients de prédiction linéaire déterminés à l'aide de l'analyse à court terme.

8. Dispositif selon la revendication 7, caractérisé en ce que les moyens (LTA1) d'analyse à long terme comprennent un premier filtre de pondération (F5) qui détermine la contribution [s0(p)] fournie aux analyses et synthèses relatives à une trame courante par les analyses et synthèses effectuées précédemment en pondérant un signal nul par une fonction de pondération [1/A(z,γ)] qui dépend des coefficients de prédiction linéaire reconstitués après la quantification vectorielle, et un premier additionneur (SM3), qui soustrait cette contribution d'un premier signal pondéré [$s_w$(p)], obtenu par mise en forme spectrale des signaux d'entrée du codeur (CD1, CD2) et qui fournit un premier signal d'erreur [s1(p)], utilisé au moins pour la détermination du retard (M) de l'analyse à long terme.

9. Dispositif selon la revendication 8, caractérisé en ce que les moyens (LTA1) d'analyse à long terme comprennent en outre:

- un premier filtre de synthèse à long terme (LTP4), qui reçoit un signal nul, qui présente une fonction de transfert dépendant du retard et du gain de l'analyse à long terme, et qui utilise successivement toutes les valeurs possibles du retard et, pour chacune d'elles, une valeur du gain [b(m)] qui est la valeur optimale pour ce retard;
- un deuxième filtre de pondération (F6), connecté à la sortie du premier filtre de synthèse à long terme (LTP4) et ayant comme fonction de transfert ladite fonction de pondération;
- un deuxième additionneur (SM4), qui reçoit à une première entrée le premier signal d'erreur [s1(p)] et à une seconde entrée le signal de sortie du deuxième filtre de pondération (F6), et qui émet un deuxième signal d'erreur [s3(p)], qui est la différence entre les signaux présents à sa première et seconde entrée;
- une première unité de traitement (CMB1), qui fournit successivement au premier filtre de synthèse (LTP4) toutes les valeurs possibles (m) du retard de l'analyse à long terme, et qui reçoit le deuxième signal d'erreur et qui détermine la valeur du retard qui en minimise l'énergie et qui constitue le retard optimal (M), l'unité de traitement mettant à zéro à chaque nouvelle valeur du retard la mémoire du deuxième filtre de pondération (F6);

et en ce que les moyens (EG1) de détermination du modèle optimal d'excitation comprennent:

- un deuxième filtre de synthèse à long terme (LTP5), qui reçoit un signal nul, qui présente une fonction de transfert analogue à celle du premier filtre de synthèse (LTP4) et qui utilise la valeur optimale (M) du retard et une valeur [b(i)] du gain qui est la valeur optimale pour un vecteur d' excitation [e(i)] donné;
- un troisième additionneur (SM5), qui somme le signal de sortie du deuxième filtre de synthèse (LTP5) au signal de sortie d'un premier multiplicateur (M1) qui multiplie un vecteur d'excitation par un facteur d'échelle respectif;
- un troisième filtre de pondération (F7), connecté à la sortie du troisième additionneur (SM5) et ayant comme fonction de transfert ladite fonction de pondération $[1/A(z,\gamma)]$;
- un quatrième additionneur (SM6), qui reçoit à une première entrée le premier signal d'erreur [s1(p)] et à une seconde entrée le signal de sortie [s4(p)] du troisième filtre de pondération (F7) et qui émet un troisième signal d'erreur [s5(p)], qui est la différence entre les signaux présents à sa première et seconde entrée;
- une deuxième unité de traitement (CE1), qui fournit au deuxième filtre de synthèse (LTPS) la valeur du gain [b(i)] et au premier multiplicateur (M1) les vecteurs et les facteurs d'échelle, qui reçoit le troisième signal d'erreur [s5(p)] et détermine la combinaison de gain (B), vecteurs d'excitation et facteurs d'échelle respectifs qui forme le modèle optimal d'excitation en minimisant l'énergie du troisième signal d'erreur, la seconde unité de traitement (CE1) mettant à zéro à chaque nouvelle combinaison de gain, vecteur et facteur d'échelle les mémoires du troisième filtre de pondération (F7).

10. Dispositif selon la revendication 8, caractérisé en ce que les moyens (LTA1) d'analyse à long terme comprennent en outre:

- un troisième filtre de synthèse à long terme (LTP6), qui a une fonction de transfert qui dépend du retard de l'analyse à long terme, qui reçoit un signal nul et qui, pendant la détermination du retard optimal de l'analyse à long terme, utilise successivement toutes les valeurs possibles du retard, tandis que, pendant la détermination du modèle optimal d'excitation, il utilise la valeur optimale du retard;
- un quatrième filtre de pondération (F8), connecté à la sortie du troisième filtre de synthèse à long terme (LTP6) et ayant comme fonction de transfert ladite fonction de pondération;
- un deuxième multiplicateur (M2), qui est connecté à la sortie du quatrième filtre de pondération (F8) et qui, pendant la détermination du retard optimal de l'analyse à long terme, pour chaque valeur du retard utilisé dans le troisième filtre de synthèse (LTP6), multiplie le signal (t1) de sortie du quatrième filtre de pondération (F8) par une valeur [b(m)] du gain de l'analyse a long terme qui est la valeur optimale pour ce retard, tandis que, pendant la détermination du modèle optimal d'excitation, il multiplie le signal de sortie du quatrième filtre (F8) par une valeur [b(i)] du gain de l'analyse à long terme qui est la valeur optimale pour un vecteur d'excitation donné;
- un cinquième additionneur (SM7), qui reçoit à une première entrée le premier signal d'erreur [s1(p)] et à une seconde entrée le signal de sortie du deuxième multiplicateur (M2), et qui émet un quatrième signal d'erreur [s7(p)] constitué par la différence entre les signaux présents à sa première et seconde entrée;
- une troisième unité de traitement (CMB2), qui fournit successivement au troisième filtre de synthèse (LTP6) toutes les valeurs possibles (m) du retard de l'analyse a long terme, en mettant à zéro à chaque nouvelle valeur la mémoire du quatrième filtre de pondération (F8), et qui, pendant la détermination du retard optimal, fournit au deuxième multiplicateur (M2) les valeurs du gain [b(m)], reçoit le quatrième signal d'erreur et détermine la valeur de retard qui minimise l'énergie du quatrième signal d'erreur et qui constitue le retard optimal (M);

et en ce que les moyens (EG1) de détermination du gain optimal (B) de l' analyse à long terme, des vecteurs e(i) et des facteurs d'échelle respectifs (g) qui forment le modèle optimal d'excitation comprennent:

- un cinquième filtre de pondération (F9), qui reçoit les vecteurs d'excitation et qui a comme fonction de transfert ladite fonction de pondération;
- un troisième multiplicateur (M3) qui est connecté à la sortie du cinquième filtre de pondération (F9) et qui, pour chaque vecteur fourni à ce cinquième filtre de pondération, multiplie le signal de sortie du filtre (F9) pour un facteur d'échelle optimal;
- un sixième additionneur (SM8), qui reçoit à une première entrée le quatrième signal d'erreur [s7(p)] et à une seconde entrée le signal de sortie [s8(p)] du cinquième filtre de pondération (F9), et qui émet un cinquième signal d'erreur [s9(p)], constitué par la différence entre les signaux présents à la première et à la seconde entrée;
- une quatrième unité de traitement (CE2), qui fournit au cinquième filtre de pondération (F9) les vecteurs d'excitation, au troisième multiplicateur (M3) le facteur d'échelle optimal pour chaque vecteur fourni au cinquième filtre de pondération (F9), et au deuxième multiplicateur (M2) le gain de l'analyse a long terme optimal pour ce vecteur, et qui reçoit le cinquième signal d'erreur [s9(p)] et qui détermine la combinaison de gain (B) de l'analyse a long terme, vecteurs d'excitation et facteurs d'échelle respectifs qui forme le modèle optimal d'excitation en minimisant l'énergie du cinquième signal d'erreur [s9(p)], la quatrième unité de traitement mettant à zéro les mémoires du cinquième filtre de pondération (F9) à chaque nouvelle combinaison de vecteur, facteur d'échelle, gain de l'analyse à long terme.

11. Dispositif selon la revendication 9 ou 10, caractérisé en ce que la seconde et la quatrième unité de traitement (CE1, CE2) sont aptes à engendrer le dictionnaire des vecteurs d'excitation à partir d'un nombre limité de vecteurs clé, chacun constitué par une paire d'échantillons d'amplitude unitaire relatifs chacun à un instant d'échantillonnage différent, le nombre d'échantillons utilisables pour la création des paires étant non supérieur au nombre d'échantillons qui constituent un vecteur du dictionnaire.

12. Dispositif selon la revendication 10, caractérisé en ce que la seconde unité de traitement (CE1) est apte à fournir au premier multiplicateur (M1) des valeurs des facteurs d'échelle qui sont normalisées par rapport à la valeur maximale ou à la valeur moyenne de ces facteurs dans une trame, et à optimiser à chaque trame cette valeur maximale ou moyenne de manière à minimiser l'énergie du cinquième signal d'erreur [s9(p)].

FIG. 1

FIG. 2

FIG. 3

FIG. 4                    CD1 (CD2)

FIG. 5

FIG.6